# EUROPEAN PATENT APPLICATION

(11) **EP 2 395 495 A2**
(43) Date of publication of application: **14.12.2011**
(21) Application number: 11168354.6
(22) Date of filing: 01.06.2011
(51) Int. Cl.: G09B 29/10, G09B 21/00

(54) **Hand-held navigation aid for individuals with visual impairment**

(30) Priority: 11.06.2010 IN MU17782010
(71) Applicant: Tata Consultancy Services Ltd., Mumbai 400 021, Maharashtra (IN)
(72) Inventor: Jadhav, Charudatta Vitthal, 400601 Mumbai (IN); Jagyasi, Bhushan, 400601 Mumbai (IN)
(74) Representative: Heinze, Ekkehard

(57) **Abstract**

The present application relates to a hand-held navigation aid and method that assists the visually impaired individuals to navigate and perform routine activities independently. The method enables visually impaired individuals to identify the hindrances using navigation means. The method assists visually impaired individual to navigate in all types of environment, outdoor with or without GPS facility and indoor with or without GPS facility by means of the hand-held navigation aid,

## Description

### FIELD OF THE APPLICATION

The present application relates to a hand-held navigation aid for individuals with visual impairment. More particularly, the application relates to a hand-held navigation aid and method that assists the visually impaired individuals to navigate and perform the routine schedule independently.

### BACKGROUND

The biggest challenge for a person with physical limitation such as visually impaired individuals or blind or senior citizens or partially blind or legally blind individuals is to navigate independently and perform their routine schedule independently. Particularly, visually impaired individuals can't navigate and perform their basic day-to day activities, without the support of other individuals, or without using any other artificial support aid such as white cane, sensors or a watch dog.

This navigation problem is solved to some extent by use of white canes, sensors; watch dogs that assist the visually impaired individuals to navigate around.

The white cane used by a visually impaired individual is capable of detecting an object which is in the vicinity of 1-1.5 meters, and typically depends directly on the length of the white cane and indirectly on the height of the visually impaired individual.

Further, a visually impaired individual can use sensors such as ultrasound or infrared sensors, hosted on cap or belt or shoes or white cane to detect the nearby object or hindrance. Though being useful, the disadvantage is to carry and handle the multiple devices such as sensors hosted on the objects such as cap or belt or shoes along with the white cane.

Further, another means of navigation used by the visually impaired individuals is watch-dogs. This means is restricted to trained individuals to decipher information in such abstract mode of navigation.

Further, the difficulty of navigation is far increased, while navigating in remote and unknown places. Though lot of means for remote communication including mobile phone is available, they are of less use for individuals with visual impairment, in terms of navigation. Though this problem is solved to certain extent by use of GPS embedded communication system, the visually impaired individual has to depend on oral communication or written communication with Braille interface.

Further another difficulty is to carry the bulky systems with sensors, white cane, Braille interface and GPS system to navigate.

Another difficulty for a visually impaired individual besides navigation is to perform the routine activities such as locating doors, locating nearby objects in home, office and restaurants and basic activities such as filling a cup with water or beverages without actually touching the object or beverages.

Hence there is an urgent need to provide such individuals with a means to navigate and perform routine schedule independently.

The current state of art restricts the universal application of the navigation means for visually impaired individuals. Hence there is an urgent requirement for a universal navigation means for disabled individual whereby such disabled individual would be able to navigate and perform the routine activities like the rest of the world without carrying the bulky systems.

In the present application we propose a novel approach with additional functionalities such as integrating the hardware such as sensors in the existing communication aid to overcome all the above mentioned limitations for individual with visual impairment and provide a practical usability of carrying only the communication means instead of the bulky systems.

It is evident that there is a need to have a customizable solution to individuals with physical limitation such as visually impairment to navigate and perform daily routine activities independently.

In order to address the long felt need of such a solution, the present application provides hand-held navigation aid and method that assists the visually impaired individuals to navigate and perform the daily activities independently.

### SUMMARY

Before the present systems and methods, enablement are described, it is to be understood that this application is not limited to the particular systems, and methodologies described, as there can be multiple possible embodiments which are not expressly illustrated in the present disclosures. It is also to be understood that the terminology used in the description is for the purpose of describing the particular versions or embodiments only, and is not intended to limit the scope of the present application.

The principle object of the application is to provide a hand-held navigation aid and a method for individuals with visual impairment.

Another object of the application is to enable real-time navigation assistance for individuals with visual impairment.

Yet another object of the application is to provide a unified solution for navigational assistance for all environments such as but not limited to (a) Public Outdoor, (b) Indoor with GPS (c) Indoor without GPS.

Yet another object of the application is to provide assistance for other routine activities such as but not limited to indoor for ex: filling a cup of coffee, working on office table, detecting various things while being at restaurant or at home.

Yet another object of the application is to provide a unified solution to assist visually impaired individual while traveling by the public transport.

Another object of the application is to analyze both the signals (GPS and Sensors) together on the personal hand-held communication aid of the visually impaired individual and provide the assistance to the visually impaired individual in several routine activities.

We use both GPS and Sensors data to be analyzed together to address different environment. The GPS based navigation system gives global information for the GPS mapped objects and path which provides assistance to reach the final destination. Whereas the sensors based system provides local information about immediate hurdles and objects as detected by sensors embedded on hand-held device.

Yet another object of the application is to provide complete assistance to visually impaired individual to navigate independently to frequently visited places by storing maps of the frequently used paths, such as home to office, office to home, home to market, market to home, home to medical store, medical store to home on a personalized manner, on the GPS enabled hand-held communication aid to provide navigational assistance to visually challenged individual. The history of movement of the visually impaired individual for example: going to office at a fixed time by taking certain fixed route is observed and stored on the GPS enabled communication means.

Yet another object of the application is to provide complete assistance to visually impaired individual to identify how far is the closest hindrance or obstacle in all the orientations while walking with a use of hand-held navigation aid with additional hardware and software functionalities.

Yet another object of the application is to provide complete assistance to visually impaired individual by finding and notifying the selected nearest person in the vicinity of a disabled person to provide assistance required by the disabled person for some critical task, The assistance is provided by analyzing all the signals received from GPS receivers of the selected person and the visually impaired person.

Yet another object of this application is to store the maps on the central server (global information base) for the paths that are not regularly followed by any visually challenged person. All maps on central server and maps of personalized frequently used path on personalized mobile phone can be stored on hybrid data storage. The hybrid map data storage in server and on mobile phone provides the cost effective and time critical advises on the path to be chosen by any individual to reach the mentioned destination.

Yet another object of the application is to assist a visually impaired individual to identify the location of the door of the public transport vehicles without actually touching the vehicle by hand or white cane or any other object.

Yet another object of the application is to assist a visually impaired individual is to assist to distinguish between the two carriages of the train and the door of any carriage in the public transport vehicles without actually touching the vehicle by hand or white cane or with any other object.

Yet another object of the application is to find the desired location that includes but not limited to important buildings, shopping malls, hospitals, while walking on the street.

Yet another object of the application is to find the desired location such as ward number in a hospital, particular shop inside a mall, office in a building, lab or classroom in a university, and so on.

Yet another object of the application is to provide a portable navigation aid, which can also be used for communication.

Yet another object of the application is to embed array of ultrasound sensors or optical sensors or both ultrasound and optical sensors on the communication aid to obtain distance from the closest object in the direction of pointing.

Yet another object of the application is to detect the sudden occurrence of pothole, steps or uneven surface while walking on the road.

Yet another object of this application is to analyze both the signals (GPS and Sensors) together on the personal mobile phone of the blind person and provide the assistance to the blind person in several activities such as to get the information of the traffic signals while walking on the streets.

Another object of the application is to provide the information of distance of the object/hindrance, gathered by ultrasound or optical sensors embedded on the communication means, with the help of continuously varying vibration intensities dependant on distances of the hindrances on the trajectory of scan done by the mobile phone.

Yet another object of the application is to provide information to a disabled person, before starting from home, about the current location of the bus and how much time it will take to reach the stop based on dynamic traffic condition, statistics based on personalized history of general walking speed of the particular blind person and current location of both, the bus and the blind person.

The user provides input to the remote communication means. The input provided to the communication means is further transmitted to the central server via the server of the service provider to assist the visually impaired individual in navigation.

The central server determines the position of the said user using GPS in the communication means.

The navigational guidance in the form of speech output is communicated to the user through the remote communication means.

A method for assisting visually impaired individuals for navigation, the said method comprises the steps of providing request for navigational assistance in speech format via input means to the remote communication means, converting the request provided in speech format to text format using data format converting means, communicating the request for navigation assistance in the form of text format to central server via the server of the service provider, receiving the signals of the Global Positioning System receiver of remote communication means by central server, determining the current position of the user using the received signals and providing navigational assistance data to the user by central server, communicating the navigational assistance data to the remote communication means of the user in the text format, converting the received text of step f) to speech output using data format converting means, and communicating the converted speech output to provide navigational assistance to the user with visual impairments.

The above said method and system are preferably a hand-held navigation aid and a method for individuals with visual impairment, but also can be used for many other applications.

### BRIEF DESCRIPTION OF THE DRAWINGS

The foregoing summary, as well as the following detailed description of preferred embodiments, is better understood when read in conjunction with the appended drawings. There is shown in the drawings example embodiments, however, the application is not limited to the specific system and method disclosed in the drawings.

**Figure 1** of the present application illustrates an integrated communication environment having various functional components communicatively coupled with the navigation aid used by the individuals with disabilities for real-time navigation.

**Figure 2** illustrates the output generation framework at the receivers' end and an associated input data flow through various conversion components for the synthesis of the transmitted signals received from the senders' terminal.

**Figure 3** illustrates the navigation mode for the visually impaired individual using the hand-held navigation aid of the present application.

**Figure 4** illustrates assistance provided to a disabled person to travel in the public transport vehicle such as bus.

**Figure 5** illustrates the detection of door (4) of any public transport vehicle (3) by a person with visual impairment (A) with the help of hand held navigation aid with an array of ultrasound sensors and text to speech application.

**Figure 6**
a) illustrates the ray direction when a user first encounters empty space or a door of a carriage.
b) illustrates the ray direction when a user encounters empty space or a door of a carriage. The ray direction shown in figure (as indicated in (a) and (b) above) helps a person with visual impairment to independently distinguish between the door of carriage and empty space between two carriages to avoid fatal accidents.

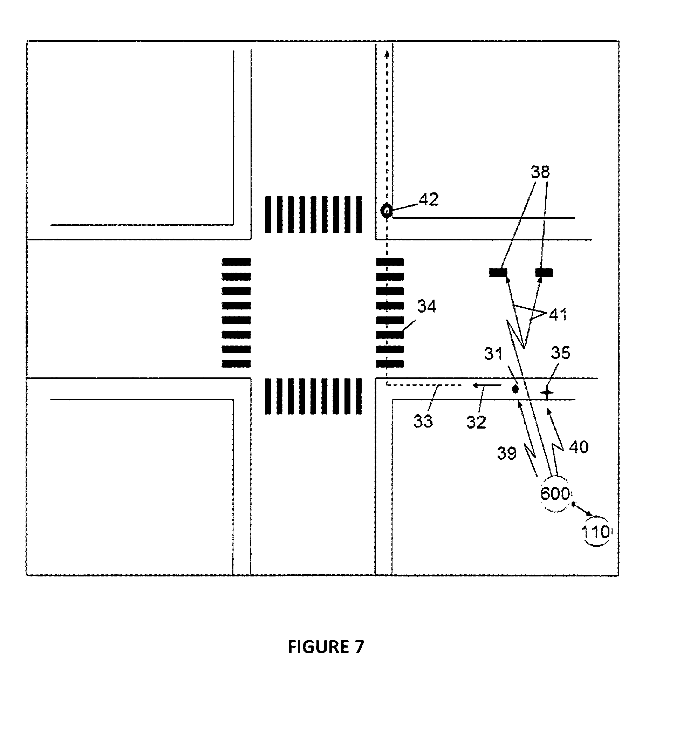

**Figure 7** illustrates the assistance provided to a person with visual impairment by GPS receiver embedded in the navigation aid in terms of each and every turns which are required to be taken; distances of intermediate straight walks, obstacles on the way. The figure also illustrates the process to select a person or volunteer in the near by vicinity of visually impaired individual by using GPS enabled, and thereby help the visually impaired individual to cross the road while traveling towards the destination.

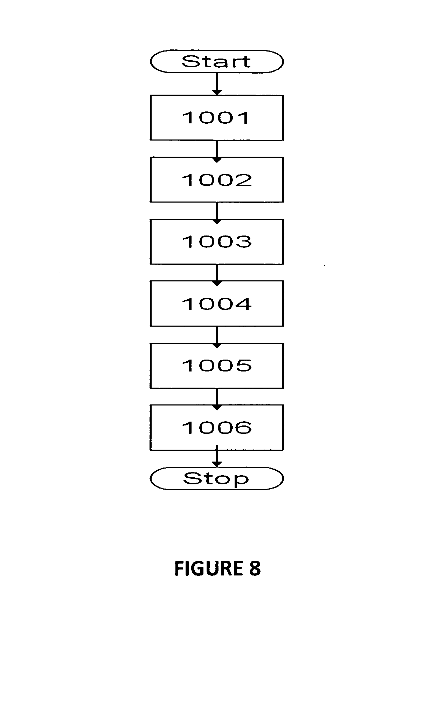

**Figure 8** illustrates flow diagram for assistance provided to person with visual impairment for traveling in the public transport such as bus.

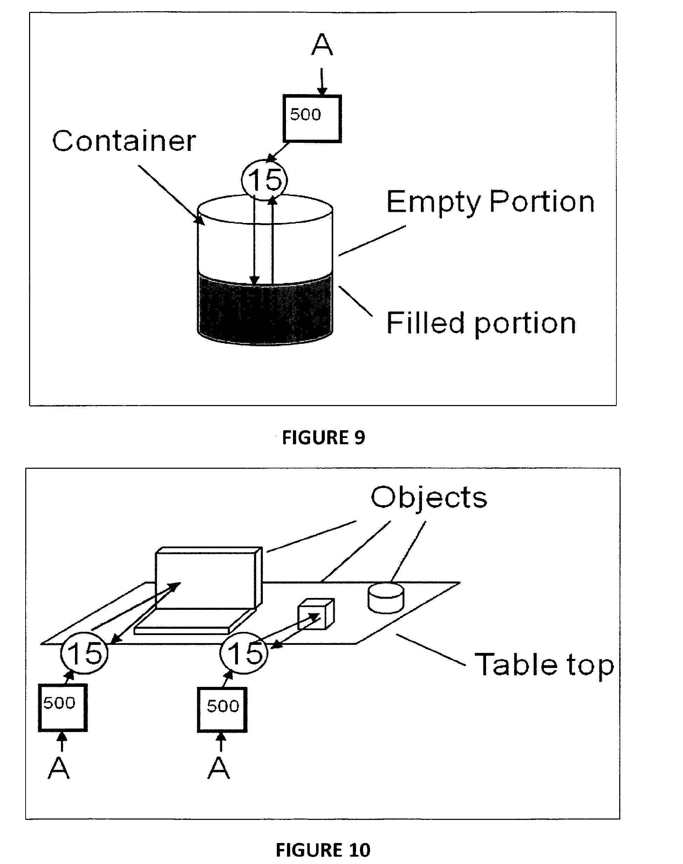

**Figure 9** illustrates the application of ultrasound sensor embedded with mobile phone in providing information on how much a cup of coffee is filled.

**Figure 10** illustrates the application of ultrasound sensor embedded with mobile phone in providing information about the objects kept on the top of the table.

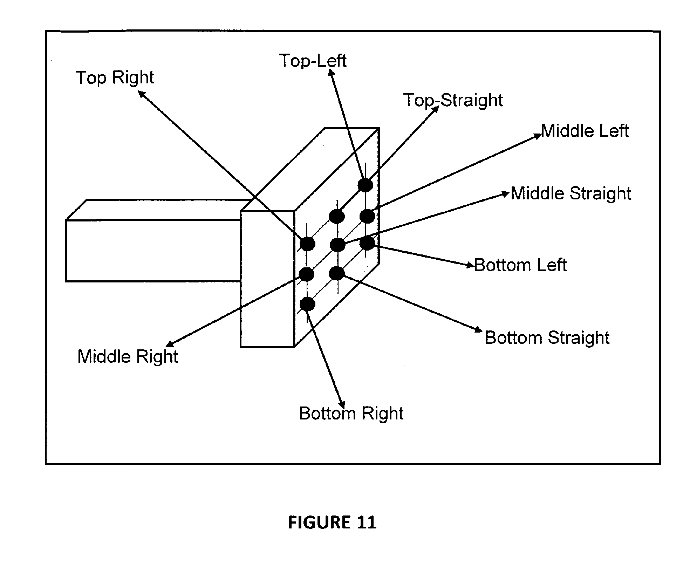

**Figure 11** illustrates the assembly of array of sensors with different number of sensors to be embedded either on the mobile phone or on independent board which can be interfaced with mobile phone over wire or wireless channel.

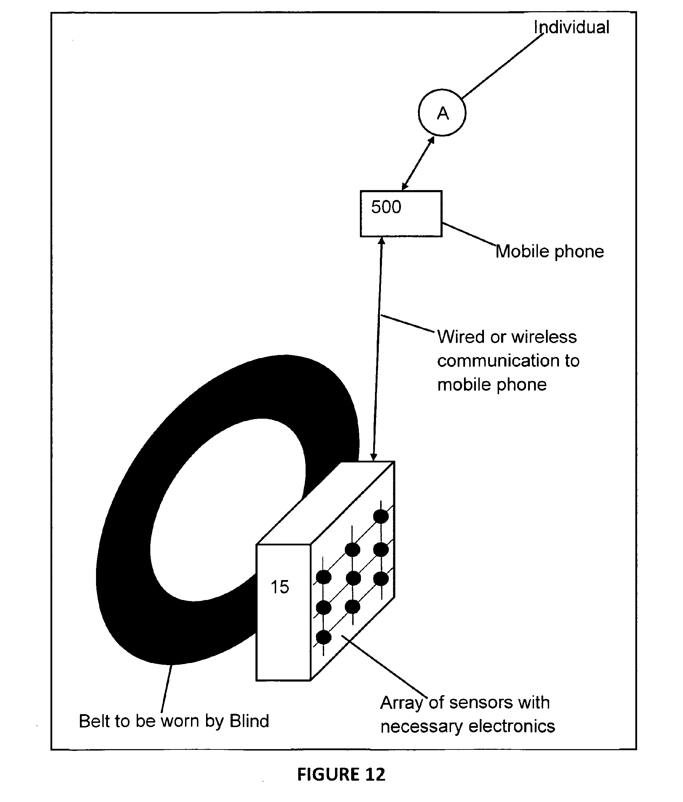

**Figure 12** illustrates the possible assembly of sensors that can be attached with belt of the person while walking.

### DETAILED DESCRIPTION

Some embodiments, illustrating its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any methods, and systems similar or equivalent to those described herein can be used in the practice or testing of embodiments, the preferred methods, and systems are now described. The disclosed embodiments are merely exemplary.

In one of the significant embodiment of the present application a hand-held navigation aid is provided for assisting the visually impaired individuals to navigate and perform routine activities independently. The said hand-held navigation aid of the present application for visually impaired individuals comprising:
a communication means connected to the server of the service provider facilitating real-time remote communication with other communication devices
a communication means further having Global Positioning System receiver;
a communication means further having detachable sensors for detecting the obstacles, objects or hindrances;
an input means for feeding one or more types of message inputs to the said communication means;
a data format converting means for converting one data format into another data format during sending and receiving messages through the said communication means;
an user interface for interactively receiving the messages and acting as an output means for assisting the visually impaired individuals to navigate.

In a preferred embodiment of the application the hand-held navigation aid can be chosen from any communication means that can be wirelessly connected to the mobile phone, a Personal Digital Assistant (PDA) or any portable communication device, palm-top, mobile digital assistant, and digital wrist watch.

In a preferred embodiment of the present application, a data format converting means for converting one data format into another data format during sending and receiving messages through the said communication means comprises of Text to Speech engine (TTS) to convert the information from text format to speech format and Automatic Speech Recognition Engine (ASR) to convert the information in speech format to text format.

In a preferred embodiment of the present application, the said communication means is integrated with an array of hardware such as but not limited to GPS, ultrasound or infrared sensors.

The present application provides a method for assisting the visually impaired individuals to navigate and perform their routine activities independently.

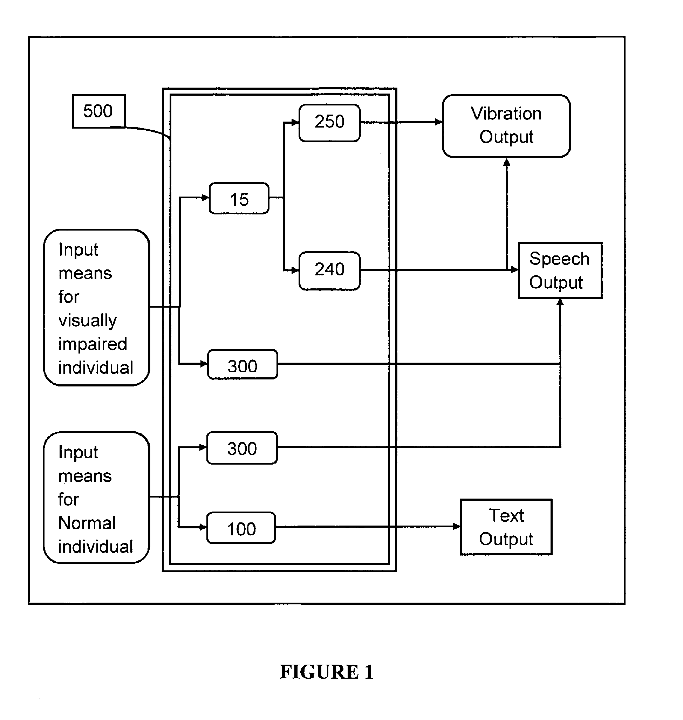

**Figure 1** of the present application illustrates an integrated communication environment having various functional components communicatively coupled with the navigational aid used by the individuals with visual impairment for real-time communication and navigational assistance.

According to one of the embodiment of the present application, the user of the present application can be visually impaired individuals, blind or senior citizens or partially blind or legally blind individuals or normal individuals. Further the user may also be print illiterate.

The visually impaired user provides input in the form of speech; whereas the normal user can provide input in speech format or text format through the remote communication means (500).

The input means in the said communication means comprises of keypad **(100),** microphone **(300)** wherein the input means may be built-in or attached or wirelessly connected to the communication means **(500).**

According to one of the embodiments of the present application, the communication means **(500)** of the present application further has detachable sensors such as but not limited to ultrasound or infrared sensors **(15)** to detect the nearby object or hindrance, which may be static or moving objects in the path such as but not limited to potholes, individuals, pets,

Detection algorithm application **(240)** connected to the sensors in the communication means **(500)** detects the nearby moving or still object or hindrance. The detection algorithm can be used to detect objects at both face and head level.

Further, according to one of the embodiments of the present application, different distance to vibration mapping strategies are designed based on the inputs provided by the user.

The vibration algorithm **(250)** provides different vibration modes for communication means **(500)** which will in turn help the visually impaired individual to navigate in different scenarios. These modes provide variations in intensity, sensitivity and frequency of vibration and can be configured on a click of button based on the different application scenarios.

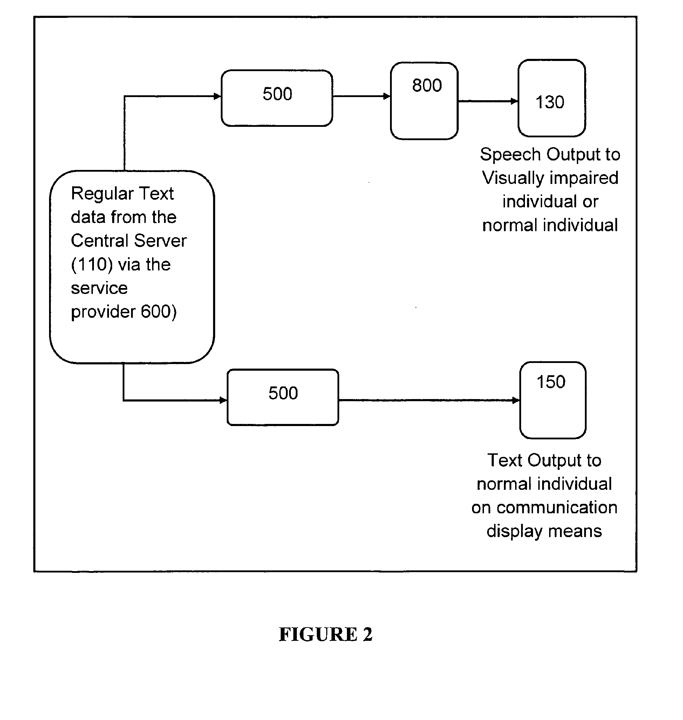

**Figure 2** of the present application illustrates the output generation framework at the receiver's end and an associated input data flow through various conversion components for synthesis of the transmitted signals received from the sender's.

The regular text input data in the form of map and routes to reach the destination is received on the communication means **(500)** of the individual with visual impairments from the central server **(110)** via service provider (600).

The received text input data is further converted to speech using a text-to-speech synthesis engine (TTS) **(800).** This speech output is further conveyed to the user via speaker (130), which may be built-in or attached separately or wirelessly connected to the communication means **(500).**

Further, the received text input data from the central server **(110)** via service provider (600) can be communicated to the normal individual in text format using the display means **(150)** of the communication means **(500).**

One of the embodiments of the present application transmits the navigational assistance data in regular text format received from the central server **(110)** as text output for normal individuals.

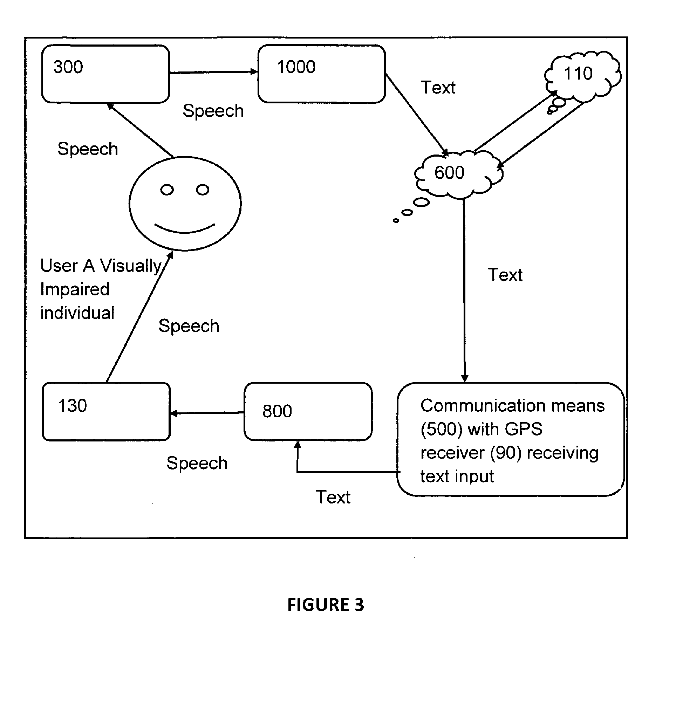

**Figure 3** illustrates the navigation mode for the visually impaired individual using the hand-held navigation aid of the present application.

According to one of the embodiments of the present application, the remote communication means **(500)** of the present application further has Global Positioning System receiver **(90)** to determine the exact latitude-longitude coordinates of the individual seeking assistance.

The GPS system integrated with the communication means facilitates user with speech inputs about the path to reach the destination of interest and provides assistance based on the stored maps in the central server **(110).** The GPS system thus provides navigational assistance by providing location of the mapped static objects and places.

User A with visual impairment provides request either in speech input form through microphone **(300).** The speech input provided by the user A is then transmitted to ASR **(1000)** for converting the speech input to text output. The synthesized text output request is then further transmitted to the central server **(110)** to obtain navigational assistance via the service provider **(600).**

The central server **(110)** has database with stored maps and routes, which provides navigational assistance to the individuals. On receipt of the request from User A via the service provider (TSP) **(600),** central server provides the stored maps and routes to the user A for navigation in text format.

The regular text input data received in the form of map and routes to reach the destination is received on the communication means **(500)** of the individual with visual impairments from the central server **(110)** via service provider **(600).** According to one of the embodiments of the present application, the service provider may be a telecom service provider or a third party service provider.

The regular text input data received on the remote communication means **(500)** from the central server **(110)** is then transmitted to TTS **(800)** to convert the navigational assistance data received in text format to speech output for the visually impaired individuals.

The synthesized speech output is then communicated to the visually impaired user via speaker **(130)** as the output means which may be built-in or attached separately or wirelessly connected to the said remote communication means **(500)** with detachable sensors.

Further according to one of the embodiments of the present application, the detachable sensors provide assistance by detecting the static and moving objects, which are not stored in the maps in the central server **(110)** and alerts the user about the object and hindrance. Thus, both signals received from GPS and the detachable sensors provide complete independent navigational assistance to the user.

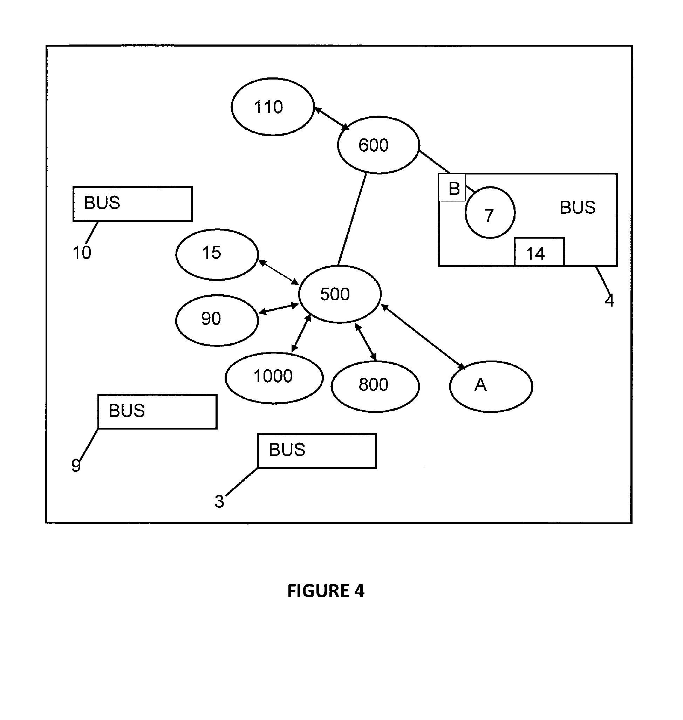

**Figures 4** to **10** are explained in brief in best mode/ working example of the application.

**Figure 11** illustrates the assembly of array of sensors with different number of sensors to be embedded either on the mobile phone or on independent board which can be interfaced with mobile phone over wire or wireless channel.

The arrangement of sensors can be subset of this or sensors can be oriented as per the application or requirement of the individual.

The arrays of sensors embedded in the mobile phone or independent board such as but not limited to belts as depicted in the **figure 11** shows the direction in which the given sensors can sense and detect the objects or hindrances in the path.

Further according to one of the embodiments of the present application, the range of detection of object or hindrance varies based on the capability of the ultrasound sensor used. Generally the range is from 6-8 meters.

**Figure 12** illustrates the possible assembly of sensors that can be attached with belt of the visually impaired individual while walking.

According to one of the embodiments of the present application, sensors such as ultrasound, or infrared sensors **(15)** can be in-built or separately attached to the communication means **(500)** of the present application.

The ultrasound or infrared sensors **(15)** can be further connected to the communication means by either wireless or wired communication.

The ultrasound sensors can be embedded in but not limited to belts, watch, rings, cap, and shoes and attached separately to the communication means.

The visually impaired individual starts the application and provides input to the application in the communication means and selects the distance for detecting the object. The application accepts the user input in speech format. Based on command provided by the user, the distance gets set or communication is sent to the module to activate the ultrasound sensors and capture the signal.

The signals get processed to find the distance of object from the ultrasound sensor **(15),** while walking the user can continue to provide inputs for detecting the object after few steps.

Both the signals from the GPS system and the Sensors are analyzed together on the communication means of the blind person and thereby prompt the user as soon as it detects any object which is as close as the distance mentioned.

The output received by the GPS system of the communication means is then sent to communication means in text format. The text input received by the remote communication means **(500)** is then converted to speech output using TTS and speech output is given to user to provide the details of the direction and distance of the object.

Further, according to one of the embodiments of the present application, the prompt may also be in the form of vibration alert. This provides feel of the object dimension and helps in creating picture of the physical dimensions mentally,

### BEST MODE/EXAMPLE OF WORKING OF THE APPLICATION

The application is described in the example given below which is provided only to illustrate the application and therefore should not be construed to limit the scope of the application,

**Figure 4** illustrates assistance provided to a disabled person to travel in the public transport vehicle such as bus.

According to one of the embodiments of the present application, **Figure 4** illustrates a mechanism in which a visually impaired user (A) is waiting at a bus stop 3 for a bus to reach his destination 9

According to one of the embodiments of the present application public transport vehicle such as Bus **(4)** caters to the need of visually impaired user (A), Bus **(4)** halts at bus stops 3, 9 and 10 wherein, 10 is the final destination of Bus. In order to these bus stops there are further several other stops on its route.

User (A) arrives at Bus stop 3 and learns the same from the GPS assistance provided by the navigational aid of the present application.

User (A) seeking assistance to board the Bus for destination bus top 9, requests assistance for navigation by providing speech input to the remote communication means **(500)** with support of GPS **(90),** Automatic speech recognition **(1000),** and Text to speech TTS functionalities **(800).** ASR converts speech inputs of user (A) to text format and transmits the request in text format to central server (110) via the TSP **(600)** requesting assistance to travel to destination bus stop 9 via the communication means (**500**).

On receipt of the request from the user (A), central server (**110**) determines the location of the user (A) from the signals received from the GPS receiver **(90)** of the user's remote communication means **(500),**

The central server (**110**) further accesses all GPS enabled communication devices to determine current location of the Bus **(4)** which halts through the bus stop 9. The GPS **(90)** associated with communication means of the user hosted on the bus **(7)** notifies the current position of bus to the central server **(110).**

Central server **(110)** estimates the time in which Bus (4) will reach bus stop 3 and communicates the same in text format to the communication means of the user (A). The Text to speech (TTS) application **(800)** on communication means **(500)** of the user (A) converts this information in speech which is hence communicated to the visually impaired user (A).

Further, central server **(110)** also notifies the communication means of the user hosted in the bus **(4)** to communicate to the driver B of the bus about the disabled person who is waiting on the Bus stop 3.

This request is made with the use of Text to speech (TTS) application **(800)** associated with communication means of the user hosted in the bus **(7).** Hence driver takes extra precaution while a disabled person boards on bus stop 3.

Further, on the top of the door of Bus, a beep system **(14)** is provided which automatically gets triggered by the on board mobile station of the Bus to generate discrete beeps indicating location of the door of the bus.

This helps the visually impaired user (A) to localize the door easily for boarding in the bus. The array of ultrasound or infrared sensors **(15)** embedded on mobile phone further helps for locating exact position of the door of the bus.

The beeping system on the door of the bus gets activated again at Bus stop 9 where visually impaired user (A) wants to alight. This helps the visually impaired user to understand that the bus is currently at stop 9 and also helps him in locating the door to alight down.

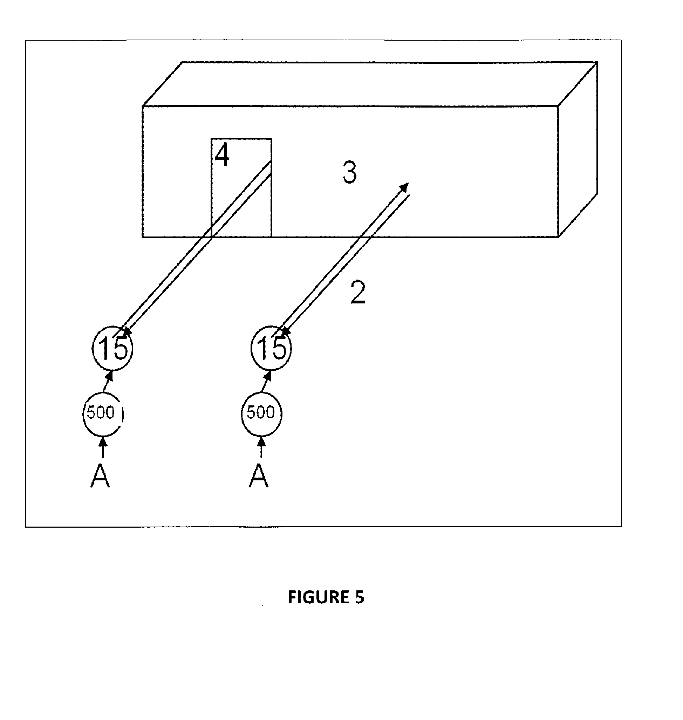

Figure 5 illustrates the detection of door **(4)** of any public transport vehicle **(3)** by a person with visual impairment **(A)** with the help of hand held navigation aid with array of ultrasound sensors and text to speech application.

Visually impaired user (A) detects the location of the door of the public transport vehicle with the communication means **(500)** of the navigation aid embedded with ultrasound sensors (15) and TTS.

According to one of the embodiments of the present application, visually impaired user (A) can point the ultrasound sensors to emit ultrasound ray (2) towards the direction of Bus and scan the bus slowly to get distance announced in a synthesized speech using TTS application running on mobile phone in small time samples.

The distance of the visually impaired user (A) from the door of the public transport vehicle such as bus is communicated with the use of vibration application running on the same hand-held communication means of the navigation aid. As soon as there is sudden increase in distance followed by again reduction in distance the door is considered to be detected.

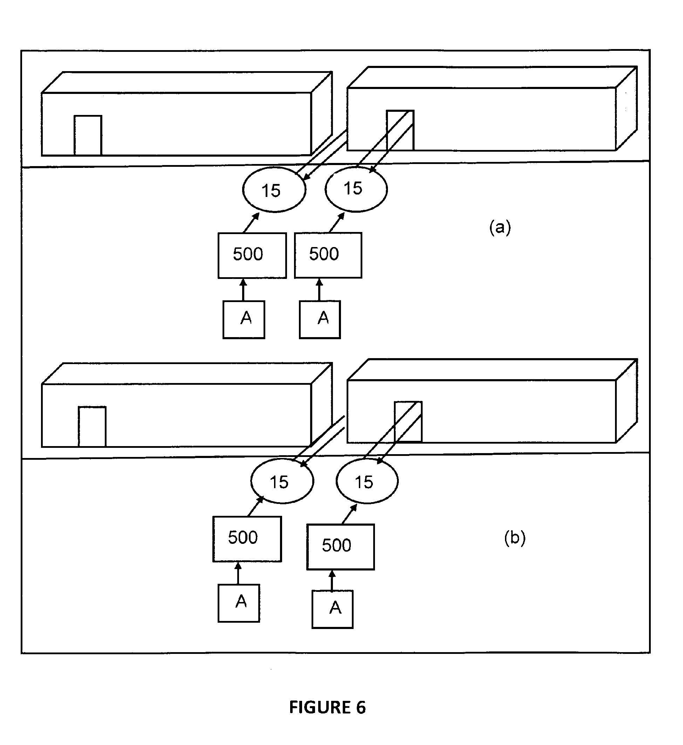

**Figure 6** a) illustrates the ray direction when a user first encounters empty space or
a door of a carriage.
c) illustrates the ray direction when a user encounters empty space or a door of a carriage
d) The ray direction shown in figure (as indicated in (a) and (b) above) helps a person with visual impairment to independently distinguish between the door of carriage and empty space between two carriages to avoid fatal accidents.

**Figure 6** a) and b) illustrates the detection of the empty space and the door of the public transport such as railway carriage. According to one of the embodiments of the present application, visually impaired user (A) can point the ultrasound sensors **(15)** to emit ultrasound ray **(2)** towards the direction of carriage of the train and scan the train slowly to get distance announced in a synthesized speech using TTS application running on mobile phone in small time samples.

The distance of the visually impaired user (A) from the door of the public transport vehicle such as train is communicated with the use of vibration application running on the same hand-held communication means of the navigation aid. As soon as there is sudden increase in distance followed by again reduction in distance the door is considered to be detected.

The empty space between two train carriages can be detected when the communication means embedded with the sensors **(15)** is pointed downwards; the empty space shows more distance than that of the door. This is because the floor of the train is approximately of the same level of the platform where user is standing and thereby, detects the door of the train carriage.

**Figure 7** illustrates the assistance provided to a person with visual impairment by GPS receiver embedded in the navigation aid in terms of each and every turns which are required to be taken; distances of intermediate straight walks, obstacles on the way. The figure also illustrates the process to select a person or volunteer in the near by vicinity of visually impaired individual by using GPS enabled, and thereby help the visually impaired individual to cross the road while traveling towards the destination.

In accordance to **Figure 7****,** a GPS based guidance system guides an individual with visual impairment about each and every turns which are required to be taken, about the distances of intermediate straight walks, and obstacles on the way.

According to one of the embodiments of the present application, the ultrasound sensor helps individual with visual impairment to detect and identify various obstacles on the way that are not stored in GPS based navigation data base. However, there are still certain critical bottlenecks tasks for which a blind person may require manual assistance from nearby persons.

According to one of the embodiments of the present application, it is difficult for any individual with visual impairment to detect persons surrounding him who will be willing to help him to cross the road. To provide assistance to blind individual, the navigation aid of the present application provides assistance to find a person who will assist to achieve such certain critical tasks.

According to one of the embodiments of the present application, visually impaired person **(31)** taking current path **(32)** requests to seek navigational assistance by providing speech input to the communication means, the communication means further transmits the request to central server **(110)** via TSP **(600).** The central server detects a person or volunteer **(35)** in the nearby vicinity of the visually impaired individual **(31)** who is willing to assist the visually impaired individual **(31)** using the GPS enabled system. The central server **(110)** further provides the path **(33)** to reach the destination **(42)** and provides the turns, crossroads **(34)** and the path **(33)** to be taken to reach the destination. Further, it provides intimation to person or volunteer willing to help **(35)** using signal **(40)** to assist a visually impaired individual **(31).**

Further, the central server **(110)** also provides a signal **(39)** to the visually impaired individual **(31)** to intimate that a person or volunteer (35) is willing to help him to cross the roads and drop him to destination **(42).**

Further, the communication means with GPS receiver of the travelling vehicles**(41)** further intimates about the visually impaired individual **(31),** who is going to cross the road in some time, thereby providing assistance to the visually impaired individual **(31)** in navigating independently or with the help of a nearby person willing to help.

Further this system and method can be used to perform other critical bottleneck activities by the visually impaired individual.

**Figure 8** illustrates a flow diagram for assistance provided to person with visual impairment for traveling in the public transport such as bus.

According to one of the embodiments of the present application, **figure 10** illustrates the steps followed by the visually impaired person to reach a given destination.

Step 1001: The visually impaired individual reaches the bus stop **(1001).**

Step 1002: visually impaired individual seeks request in speech format for navigational assistance such as the bus number or the destination where he wants to go using input means such as microphone **(300).** The speech input provided by the visually impaired individual is then converted to text using the ASR **(1000).** The text format of the request is then transmitted to the central server via the service provider.

Step 1003: On receipt of the request in text format by the central server **(110)** via the TSP **(600),** the central server system collects the current location of the visually impaired individual from GPS receiver **(90)** embedded in the communication means **(500),**

1004: On receipt of the request, the central server triggers the application residing at central server which than processes the request to identify the Bus which may cater to the request of visually impaired individual.

1005: The central server **(110)** then sends the alert to appropriate bus driver approaching that bus stop. It also prompts the visually impaired individual about the bus number which can be heard in speech using local TTS application **(800).**

1006: This information about the visually impaired individual waiting on the bus stop is then displayed on the screen located in front of driver or it is announced using TTS application **(800).**

Figure 9 illustrates the application of ultrasound sensor embedded with mobile phone in providing information on how much a cup of coffee is filled.

According to one of the embodiment of the present application, the hand-held communication means **(500)** can also be used to know how much a cup of coffee is filled while serving a cup of coffee to any guest.

The ultrasound or infrared sensors **(15)** embedded or separately attached to the communication means detects and notifies through speech output when the cup is near to full, or half filled or filled to some extent as per the program. It will also mention the distance of the coffee from communication means over a click of a button.

**Figure 10** illustrates the application of ultrasound sensor embedded with mobile phone in providing information about the objects kept on the top of the table.

According to one of the embodiment of the present application, the hand-held communication means **(500)** can also be used to know information about the objects kept on the top of the table.

The ultrasound or infrared sensors **(15)** embedded or separately attached to the communication means detects and notifies through speech output where the objects are kept on the top of the table and the distance of the object from the communication means.

The preceding description has been presented with reference to various embodiments of the application. Persons skilled in the art and technology to which this application pertains will appreciate that alterations and changes in the described structures and methods of operation can be practiced without meaningfully departing from the principle, spirit and scope of this application.

### ADVANTAGES OF THE APPLICATION

The present application provides hand-held navigation aid for individuals with visual impairment.

Provides assistance to the visually impaired individuals to navigate independently.

The independent navigation assistance is provided in all types of environment, outdoor with or without GPS facility and indoor with or without GPS facility.

Provides assistance to the visually impaired individuals to perform routine activities independently.

Provides assistance to the visually impaired individuals to detect the objects and hindrances without touching by hand or by any other devices.

The methodology and techniques described with respect to the exemplary embodiments can be performed using a machine or other computing device within which a set of instructions, when executed, may cause the machine to perform any one or more of the methodologies discussed above. In some embodiments, the machine operates as a standalone device. In some embodiments, the machine may be connected (e.g., using a network) to other machines. In a networked deployment, the machine may operate in the capacity of a server or a client user machine in a server-client user network environment, or as a peer machine in a peer-to-peer (or distributed) network environment. The machine may comprise a server computer, a client user computer, a personal computer (PC), a tablet PC, a laptop computer, a desktop computer, a control system, a network router, switch or bridge, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The machine may include a processor (e.g., a central processing unit (CPU), a graphics processing unit (GPU, or both), a main memory and a static memory, which communicate with each other via a bus. The machine may further include a video display unit (e.g., a liquid crystal display (LCD), a flat panel, a solid state display, or a cathode ray tube (CRT)). The machine may include an input device (e.g., a keyboard) or touch-sensitive screen, a cursor control device (e.g., a mouse), a disk drive unit, a signal generation device (e.g., a speaker or remote control) and a network interface device.

The disk drive unit may include a machine-readable medium on which is stored one or more sets of instructions (e.g., software) embodying any one or more of the methodologies or functions described herein, including those methods illustrated above. The instructions may also reside, completely or at least partially, within the main memory, the static memory, and/or within the processor during execution thereof by the machine. The main memory and the processor also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

The present disclosure contemplates a machine readable medium containing instructions, or that which receives and executes instructions from a propagated signal so that a device connected to a network environment can send or receive voice, video or data, and to communicate over the network using the instructions. The instructions may further be transmitted or received over a network via the network interface device.

While the machine-readable medium can be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

The term "machine-readable medium" shall accordingly be taken to include, but not be limited to: tangible media; solid-state memories such as a memory card or other package that houses one or more read-only (nonvolatile) memories, random access memories, or other re-writable (volatile) memories; magneto-optical or optical medium such as a disk or tape; non-transitory mediums or other self-contained information archive or set of archives is considered a distribution medium equivalent to a tangible storage medium. Accordingly, the disclosure is considered to include any one or more of a machine-readable medium or a distribution medium, as listed herein and including art-recognized equivalents and successor media, in which the software implementations herein are stored.

The illustrations of arrangements described herein are intended to provide a general understanding of the structure of various embodiments, and they are not intended to serve as a complete description of all the elements and features of apparatus and systems that might make use of the structures described herein. Many other arrangements will be apparent to those of skill in the art upon reviewing the above description. Other arrangements may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

The preceding description has been presented with reference to various embodiments. Persons skilled in the art and technology to which this application pertains will appreciate that alterations and changes in the described structures and methods of operation can be practiced without meaningfully departing from the principle, spirit and scope.

## Claims

1. A hand-held navigation aid for visually impaired individuals, the said navigation aid comprising:
a communication means connected to the server of the service provider facilitating real-time remote communication with other communication devices;
a communication means further having Global Positioning System receiver;
a communication means further having detachable sensors for detecting the obstacles, objects or hindrances;
an input means for feeding one or more types of message inputs to the said communication means;
a data format converting means for converting one data format into another data format during sending and receiving messages through the said communication means;
an user interface for interactively receiving the messages and acting as an output means for assisting the visually impaired individuals to navigate.

2. A hand-held navigation aid as claimed in claim 1, wherein the said hand-held communication means comprises of mobile phone, personal digital assistant, palm-top, mobile digital assistant, and wrist watch.

3. A hand-held navigation aid as claimed in claim 1, wherein the said input means in the communication means comprises of keypad, and microphone wherein the input means may be built-in or attached or wirelessly connected to the communication means.

4. A hand-held navigation aid as claimed in claim 1, wherein the said means for converting data format into another data format comprises of a automated speech recognition engine and text to speech engine.

5. A hand-held navigation aid as claimed in claim 1, wherein the said output means comprises of vibrator system and speaker wherein the output means may be built-in or attached or wirelessly connected to the communication means.

6. A hand-held navigation aid as claimed in claim 1, wherein the said detachable sensors of communication means consist of optical and ultrasound sensors for detecting the obstacles, objects or hindrances such as but not limited to pot holes, pets, moving or still vehicles.

7. A method for assisting visually impaired individuals for navigation, the said method comprises the steps of:
providing request for navigational assistance in speech format via input means to the remote communication means;
converting the request provided in speech format to text format using data format converting means;
communicating the request for navigation assistance in the form of text format to central server via the server of the service provider;
receiving the signals of the Global Positioning System receiver of remote communication means by central server;
determining the current position of the user using the received signals and
providing navigational assistance data to the user by central server;
communicating the navigational assistance data to the remote communication means of the user in the text format;
converting the received text of step f) to speech output using data format converting means;
communicating the converted speech output to provide navigational assistance to the user with visual impairments.

8. A method for assisting visually impaired individuals for navigation as claimed in claim 7, wherein the said hand-held communication means comprises of mobile phone, personal digital assistant, palm-top, mobile digital assistant, and wrist watch.

9. A method for assisting visually impaired individuals for navigation as claimed in claim 7, wherein the said input means in the communication means comprises of keypad and microphone wherein the input means may be built-in or attached or wirelessly connected to the communication means.

10. A method for assisting visually impaired individuals for navigation as claimed in claim 7, wherein the said means for converting data format into another data format comprises of an automated speech recognition engine and text to speech engine.

11. A method for assisting visually impaired individuals for navigation as claimed in claim 7, wherein the said output means comprises of vibrator system and speaker wherein the output means may be built-in or attached or wirelessly connected to the communication means.

12. A method for assisting visually impaired individuals for navigation as claimed in claim 7, wherein the said detachable sensors of communication means consist of optical and ultrasound sensors for detecting the obstacles, objects or hindrances such as but not limited to pot holes, pets, moving or still vehicles,

13. A method for assisting visually impaired individuals for navigation as claimed in claim 7, wherein, the said navigation aid provides assistance request alerts to one or more person in the nearby vicinity of the visually impaired user.
